## Europäisches Patentamt
## European Patent Office
## Office européen des brevets

(11) Publication number: 0 118 310
A2

# EUROPEAN PATENT APPLICATION

(21) Application number: 84301457.2

(22) Date of filing: 06.03.84

(51) Int. Cl.³: B 09 B 3/00

(30) Priority: 07.03.83 US 472679

(43) Date of publication of application:
12.09.84 Bulletin 84/37

(84) Designated Contracting States:
BE DE FR GB IT

(71) Applicant: Hall, Earl W.
161 Sunnyside Avenue
Norristown Pennsylvania 19401(US)

(71) Applicant: Love, William J.
219 Decatur Street
Doylestown Pennsylvania 18901(US)

(72) Inventor: Hall, Earl W.
161 Sunnyside Avenue
Norristown Pennsylvania 19401(US)

(72) Inventor: Love, William J.
219 Decatur Street
Doylestown Pennsylvania 18901(US)

(74) Representative: Hughes, Brian Patrick et al,
Graham Watt & Co. Riverhead
Sevenoaks, Kent TN13 2BN(GB)

(54) Plant and method for treating solid waste material.

(57) A system for handling and pyrolyzing municipal solid waste material; the pyrolyzing being performed in coke ovens (20) of the type used in the steel industry. The municipal solid waste material is shredded (11) to produce a particle size of approximately four inches. The shredded waste material is conveyed to a splitter arrangement (13) wherein the flow of waste material is divided into selectable flows of 50:50 or 25:25:25:25. Each such flow is terminated at a respective bale-making machine (15) where the waste material is formed into bales of predetermined dimensions and bulk density. The bales are then inspected for defects and defective bales are removed from the conveying system (17). The remaining bales are conveyed to an accumulating dock area (19) where they are counted and accumulated, and loaded into magazines capable of holding a predetermined number of bales constituting a complete oven charge. A ram device drives the bales from the magazine into the coke ovens. Mechanism is provided for automatically opening the door of the coke oven prior to loading the charge therein, applying a sealant thereto, and sealably closing the door after loading. The charge of baled municipal solid waste is pyrolyzed and a variety of useful products are generated which can be used to perpetuate the process or which can be stored and sold commercially.

./...

FIG. 1

PLANT AND METHOD FOR TREATING SOLID WASTE MATERIAL

BACKGROUND OF THE INVENTION

This invention relates generally to destructive distillation of municipal solid waste material and, more particularly, to a system wherein the municipal solid waste is conveyed to and loaded into a plurality of heating units, such as coke ovens, where the municipal solid waste is pyrolyzed.

Partially as a result of increases in the size of the population, and the rate of consumption of goods, the disposal of liquid and solid waste in this country has become a serious, growing problem which is particularly acute in overcrowded urban areas. The improper disposal of municipal solid waste can lead to pollution which detracts from the beauty of the environment and creates a health hazard. As used herein, the term "municipal solid waste" shall be deemed to include industrial and residential waste including garbage, trash, vegetable matter, metals, glass, etc., as collected, and sewage sludge.

One method which is commonly used for disposing of municipal solid waste is the so-called "land-fill" procedure wherein the wastes are mixed with dirt and eventually covered with a layer of topsoil. However, land-fill procedures are not entirely without risk because polluted run-off can pose a health hazard in adjacent areas.  Accordingly, land-fill areas are of limited capacity and available areas are being consumed rapidly.

An alternative to land-fill for the disposition of municipal solid waste is incineration or combustion. Incineration, however, produces large volumes of gases containing objectionable air pollutants;  the removal of which is both difficult and costly.  These problems are incidental to incineration, coupled with the fact that the supplies of oil and natural gas are declining rapidly, is further cause for incineration to be disfavoured.

Prudence dictates that the waste which is generated by public and industrial operations, should be considered as raw material for the production of energy, or the valuable materials therein should be recycled.  Paper, glass and aluminum tin cans have been recycled on a small scale by persons and groups who are concerned for environmental conservation.  The practice of recycling has not become widespread due to the unfortunate fact that it is cheaper to discard the material rather than to reprocess it.  The energy consumed by reprocessing places recycling in the same category as incineration insofar as both are wasteful of the world's dwindling fuel supply.  Thus, the recovery of recycled goods, by-products and/or energy from municipal solid waste is highly desirable.

Pyrolysis is the destructive distillation of the organic fraction of solid waste and is preferable over incineration on several grounds.  As a disposal method, pyrolysis has distinct advantages over simple incineration because it produces a higher quality fuel which can be more widely used to produce steam or electricity.  Pyrolysis reduces solid waste-containing matter into gases, primarily, hydrogen, aliphatic hydrocarbons, carbon monoxide and carbon dioxide; liquids, such as water and organic chemicals;  and a solid carbonaceous char.  Many useful products can be recovered from the evolved gases by the application of proper separation techniques.  An attendant advantage of the product recovery is that, since the process operates as a closed system, pollutants are not expelled into the atmosphere.  Moreover, the fractions or portions of fractions, of the generated by-products, which are not used to supply heat to continue the process can be stored for future use or sold to others for a profit. Furthermore, the remaining carbonaceous char is odourless, non-putrefiable, non-pathenogenic, and most importantly, greatly reduced in volume and capable of being used as a low energy fuel or land-fill.

The pyrolysis or organic waste material is not new. Pure pyrolysis, or the application of indirect heat in the absence of air in order to break down complex organic molecules has been disclosed in several references, including U.S. Patents Nos. 1,777,449 and 1,898,326. These and other systems, however, are known as "batch" processes and have been criticized as being inherently inefficient because a constant level of heat cannot be maintained and a constant supply of material cannot be utilized. In response, the prior art has provided improved systems described, for example, in U.S. Patents Nos. 4,038,152; 4,052,265; 4,217,175; 4,235,676; and 4,123,332; these references teach systems which use specialized pyrolysis chambers through which the feed material is continuously conveyed, typically by screw-type conveyors. These prior art systems require specialized furnaces which are expensive and must be constructed in accordance with the specifications of the particular, respective systems.

Recent attempts to provide a commercially feasible pyrolytic disposal system utilize a technique known as "starved air combustion" which is not the true equivalent of pyrolysis. In the practice of starved air combustion, a small amount of gas containing oxygen or air is used as a reagent. Several of those systems are disclosed illustratively in U.S. Patents Nos. 3,682,887 and 4,077,847. The addition of air or other gases, however, results in the production of a greater volume of evolved gases, thereby lowering the BTU content. In addition, the larger volume makes separation of the gases into constituent parts more difficult. These systems are also plagued with the disadvantage of requiring specialized incinerators which greatly increases the amount of capital input required to set up a pyrolysis waste treatment plant.

Moreover, prior art pyrolysis processes typically require extensive processing of the received waste material prior to pyrolysis. For example, the system described in U.S. Patent No. 4,077,847 utilizes two stages of shredding to produce a finely comminuted material, air classification to separate heavy materials from light materials, such as plastics from papers, magnetic separation, drying and screening. Understandably, extensive processing leads to higher energy costs.

As discussed above, batch processes have been criticized as being inefficient as a result of their inability to maintain sufficiently high temperatures when the ovens are opened for charging. A further problem arises in the supplying and maintaining of a constant rate of feed of raw municipal solid waste material to the pyrolysis chamber. In particular, a constant rate of supply of feed material is essential in operating certain types of ovens, such as refractory brick ovens, wherein damage occurs to the refractory brick unless the ovens are run continuously. In order to have a constant supply of feed material, some storage is necessary in order to compensate for variations in refuse delivery due to weekend or holiday schedules.

SUMMARY OF THE INVENTION

The foregoing and other problems of known methods of municipal solid waste treatment and of known and applied methods of pyrolizing municipal solid waste materials are alleviated by the present invention wherein existing coke oven facilities are modified to pyrolyze municipal solid waste. Central to the success of the proposed modification is a unique municipal solid waste material handling system which enables feed rate to the ovens to be maintained essentially constant and further provides a system for remote storage of feed material.

The material handling system of embodiments of this invention are comprised of a shredder for reducing the size of the municipal solid waste to particles of about four inches or less; flow splitting means which distributes the shredded material onto a plurality of conveyors which convey the shredded material to a respective plurality of baling machines; means for discharging the baled material and orienting the bales in the proper direction for transport by another conveyor; at least two separate conveyors onto which all of the baled material is fed; means for accumulating and storing the baled feed material into a complete oven charge; and means for charging the stored feed material into an oven or one of a plurality of coke ovens. The material handling system operates to ensure a substantially constant feed rate of material into the ovens. The redundancy of the feed conveying lines ensures against breakdown of the system in the event of a malfunction or to permit ease of maintenance to the system.

More specifically, the flow splitter comprises a plurality of conveyors arranged in at least two levels. In an illustrative embodiment of the invention, a pair of upper conveyors is equipped so that the conveyors run in a predetermined direction. Beneath each upper conveyor is a pair of lower conveyors which can be operated in either direction. The lower conveyors are preferably longer than the upper conveyors. Control over the directions of travel of the conveyors controls the degree of splitting of the total output of municipal solid waste material. Each lower conveyor terminates into a respective baling machine. The baling machines are designed to form bales of a predetermined size so that a predetermined number and configuration of bales will form a complete oven charge and will be of such size as to permit charging through the doors of existing ovens. Moreover, extrusion means are included in the baling apparatus to ensure that the baled material has a predetermined bulk density so that a desired heating rate for the material can be achieved.

The use of baled feed material enables raw municipal solid waste to be processed off-site and transported on-site when necessary or desired. Such baling also facilitates on-site storage of received waste material. In accordance with an embodiment of the invention, storage and transfer means are provided to enable feed of the stored baled material into the oven charging feed system.

In addition to the waste material splitting arrangement noted hereinabove which enables the raw material to be fed into the balers at a faster rate than known systems, there are further provided duplicate conveyors for transporting the baled material onto an accumulating dock. In a particular embodiment of the invention, apparatus is provided for transferring bales of waste material from one of the duplicate conveyor lines to the other in the event of an unexpected mechanical failure, or to perform schedules maintenance. In addition, the apparatus contains provision for removing bales which are either defective or outside a predetermined size tolerance range.

The bales of waste material are subsequently formed into groups of predetermined numbers of bales for charging the ovens. The bales are counted optically, accumulated, and manipulated into groups which are loaded into a plurality of magazines, each of which is capable of holding a complete oven charge. Embodiments of the invention further provide a load/ejection mechanism for removing the magazines from the accumulating dock and positioning them in front of an oven which is available for charging. This mechanism then removes the oven door, prepares it with sealer, and unloads the magazine by a ram into the oven. The empty magazine is then returned to the loading dock.

It is a particular advantage of this invention that the coke ovens which are employed to pyrolyze the municipal solid waste material are existing structures of the type utilized to manufacture coke from coal. In particular, a plurality of coke ovens are arranged horizontally in a battery. Generally, there is more than one battery of ovens at a coking facility. In an illustrative embodiment, there are 55 ovens per battery. It has been found to be particularly advantageous to feed each oven in a sequence so that the ovens in a battery are in different stages of the pyrolysis cycle at any point in time thereby ensuring a more uniform composition of evolved gases.

For the baled material used in this invention, a high heating rate can be achieved by preheating the ovens to a temperature on the order of about $1800^{\circ}F$. The pyrolysis cycle takes about four hours per charge. It should be noted that pyrolysis occurs in the absence of air or other combustion supporting gases, and is accomplished by the application of indirect heat only. Pyrolysis produces several useful products, illustratively gas, oil, organic liquids and a carbonaceous residue.

The pyrolysis temperature and heating rate is chosen so that the amount of gas evolved is maximized. The gas exits the heating chamber and is immediately quenched with a spray of cold water. Pyrolytic oil and water condensate are collected and separated. The water fraction is contaminated with various organic solvents, some of which can be separated. The process water is recycled as quench water or further purified by standard water treatment techniques and used in the system boilers. The pyrolytic oil which is separated from the water can be used as a low grade fuel oil. It is advantageous to use this oil in the boiler house.

The gases are further processed through a series of coolers, exhausters, and scrubbers to remove certain desired products by such as methyl chloride and benzene, toluene, and xylene in a known manner. The gas is then passed through oxide boxes to remove certain trace constituents. Finally, the gas is liquefied to break it down to carbon dioxide, carbon monoxide, hydrogen and aliphatic hydrocarbons such as methane, ethane, propylene, propene and butane.

A portion of the fuel gases can be used to underfire the ovens. The remainder may be sold. In the alternative, the hot gases can be used to create steam to run gas or turbine electricity generators.

After several charges, the remaining carbonaceous residue is removed through the back door of the oven and loaded into a quench car. The quench car is then sprayed with water to quench the residue. The quenched residue is loaded onto a dock for further processing, if desired. Ferrous materials are removed by magnetic means and non-ferrous materials are removed by eddy current techniques or an alternate means such as particle size differentiation. The residue may be screened to remove glass, and the remaining carbonaceous material may be used as land-fill or fuel.

It is, therefore, a principle object of this invention to use coke ovens, which are available as surplus equipment due to changes in steelmaking and foundry processes and in the economy, for the destructive distillation of municipal solid waste as an economical alternative to environmentally dangerous incineration and land-fill disposal practices.

It is another object of the invention to produce energy and fuel in the form of steam, electricity, carbon monoxide and hydrogen for in-plant combustion or sale. In addition, it is an object to produce pipeline quality methane.

It is a still further object of the invention to produce organic solvents for sale and recirculation back into the economic cycle.

The present invention is a treatment plant for municipal solid waste formed of a plurality of constituent components, the treatment system being of the type wherein the municipal solid waste is pyrolyzed in a heating unit and having a solid waste material handling system, the system being characterised by shredding means for

operating on the municipal solid waste to produce a flow of shredded municipal solid waste formed of a plurality of constituent components which have a predetermined maximum dimension; shredder discharge means for conveying said flow of shredded municipal solid waste away from said shredding means; a plurality of baler means for organizing said flow of shredded municipal solid waste into bales; flow splitter means for conveying said flow of shredded municipal solid waste along a plurality of flow paths to respective ones of said plurality of baler means; bale holding means for holding said bales of said shredded municipal waste; and bale feed means for supplying said bales to the heating unit, said bales being provided to the heating unit at a predetermined, substantially constant rate.

BRIEF DESCRIPTION OF THE DRAWINGS

These and other objects, features and advantages will be better appreciated from consideration of the following detailed description read in conjunction with the accompanying drawings wherein:-

Fig. 1 is a block and line schematic representation of a generalized system for treating municipal solid waste material in accordance with the invention;

Fig. 2 is a block and line schematic representation of a first portion of a system for treating municipal solid waste material showing greater detail than the representation of Fig. 1;

Fig. 3 is a block and line schematic representation of a second portion of the system of Fig. 2;

Fig. 4 is a block and line schematic representation of a third portion of the system of Figs. 2 and 3;

Fig. 5 is a diagram illustrating the interrelationship between Figs. 2, 3 and 4; and

Fig. 6 is a fragmented isometric representation of the internal structure of a battery of ovens.

DETAILED DESCRIPTION OF THE INVENTION

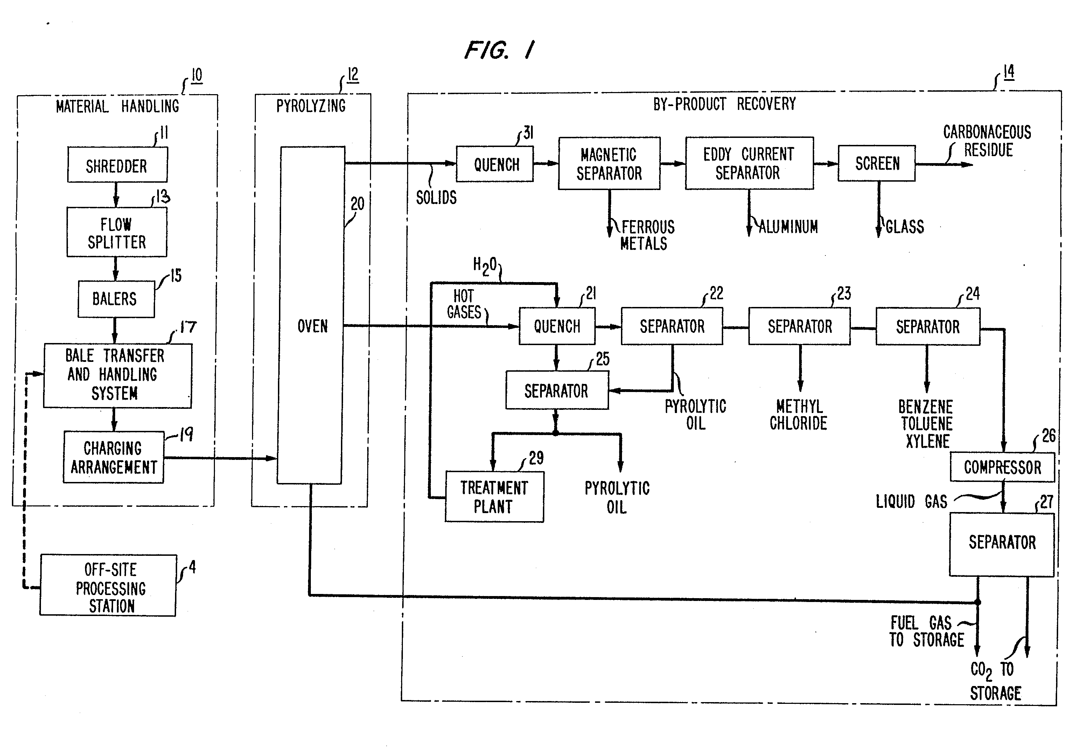

Fig. 1 is a flow chart in the form of a block diagram illustrating the basic elements and general procedure of a system for treating solid municipal waste material. There are three basic aspects of the system shown in Fig. 1 as: raw material handling 10; pyrolyzing 12; and recovery of by-products 14.

Briefly, raw material handling system 10 comprises a shredder 11, a flow splitter 13, a plurality of balers 15, a bale transfer and handling system 17, and an oven charging arrangement 19. The raw municipal solid waste material is not subjected to extensive pretreatment, but is merely comminuted in shredder 11 to produce an average particle size of four inches or less. The shredded waste material is conveyed to the plurality of balers 15 by means of flow splitter 13. Balers 15 organize the shredded waste material into bales of predetermined size which is compatible with an opening of a pyrolyzing oven 20. The bales are also compressed to a predetermined bulk density. The baled waste material is then transferred by bale transfer and handling system 17 to the oven charging arrangement 19 where it is accumulated into groups, and manipulated to facilitate oven charging in a manner to be described in greater detail below. Material handling system 10 provides oven 20 with a substantially constant rate of feed of accumulated, baled solid waste material.

An off-site processing station 4 is shown on Fig. 1 which can be used to produce shredded and baled municipal solid waste at a remote location for feeding into bale transfer and handling system 17 or for storage either at the remote location or at an on-site storage area at the municipal solid waste treatment facility.

Oven 20 is sealed so as to be air tight, and heated indirectly to a high temperature to pyrolyze the baled waste material which is charged therein. In a particularly advantageous embodiment, oven 20 comprises a battery of horizontally disposed refractory brick retorts of the type used to coke coal. In pyrolyzing step 12, gases containing oil and organic liquids are continually evolved. These gases, along with a carbonaceous residue, are separated into various fractions and recovered as useful by-products in by-product recovery system 14.

The hot evolved gas is cooled with water in quencher 21 and further transported to separators 22 to 24 to produce the end products designated on Fig. 1.

The condensible fractions of the evolved gas are separated at quencher 21 or after subsequent cooling such as in separator 22. Quench water combines with the condensed pyrolytic oil to produce a mixture which is separated in separator 25 which illustratively comprises a decanting tank wherein the quench water floats on the pyrolytic oil; the two phases being separated by decanting. The pyrolytic oil thus obtained from the separation may be used as low BTU fuel, and preferably to fire the boilers to generate steam used in the waste treatment process. The water fraction is either recycled as quench water or processed at treatment plant 29 to remove impurities and used as boiler water.

Non-condensible gases remaining after the foregoing are compressed in compressor 26 to form liquefied gases which are subjected to standard gas separation techniques in separator 27 to produce carbon dioxide and fuel gases such as methane and propane.

The solid residue remaining after pyrolysis is also quenched with water or some other means in quencher 31 in order to prevent oxide formation. Since the raw municipal solid waste was subjected only to a shredding step prior to pyrolysis, the residue may be treated further to separate non-pyrolyzable fractions. Illustratively, magnetic separator 5 removes ferrous material, eddy current separator 6 removes non-ferrous metals, such as aluminum, and screen 7 removes glass. The carbonaceous residue may be used as a low-grade fuel, as a road bed filler, or as a land-fill.

The basic aspects of the system briefly discussed in the foregoing overview will now be discussed in greater detail.

Material Handling System

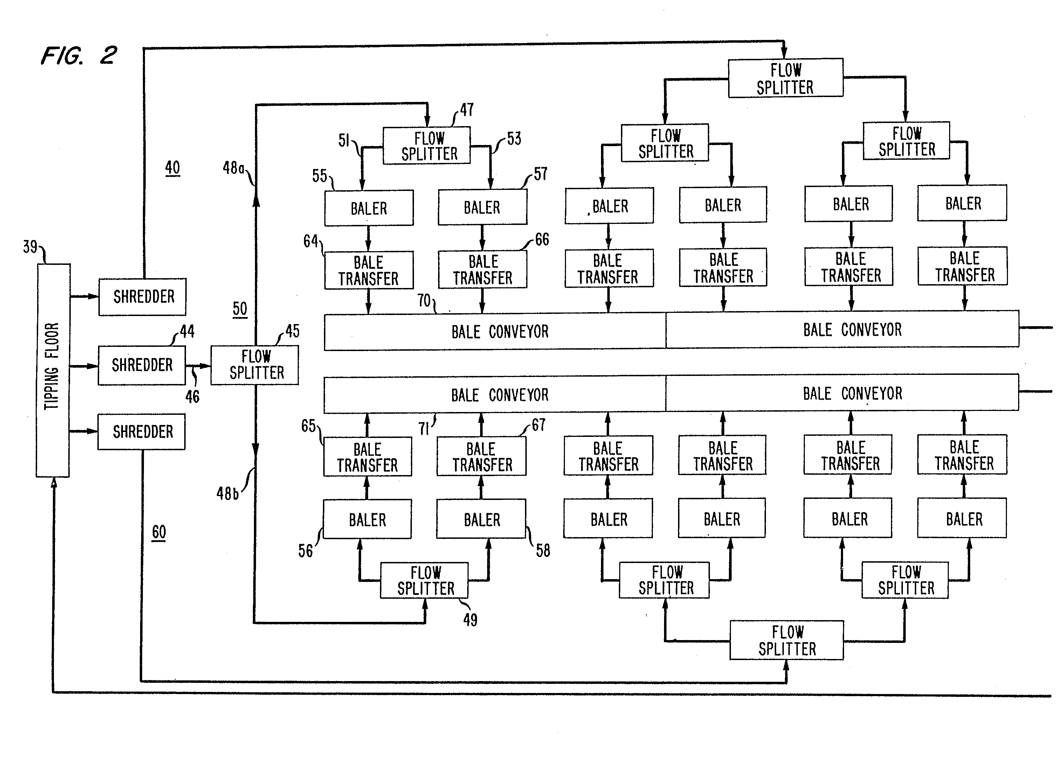

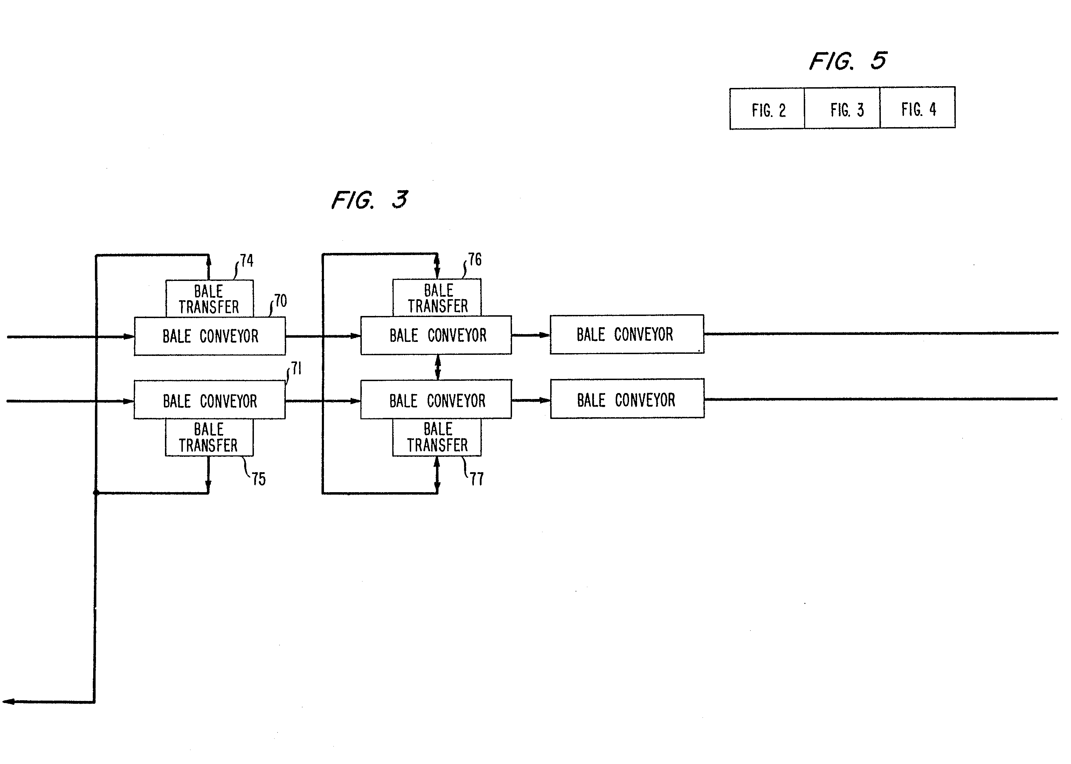

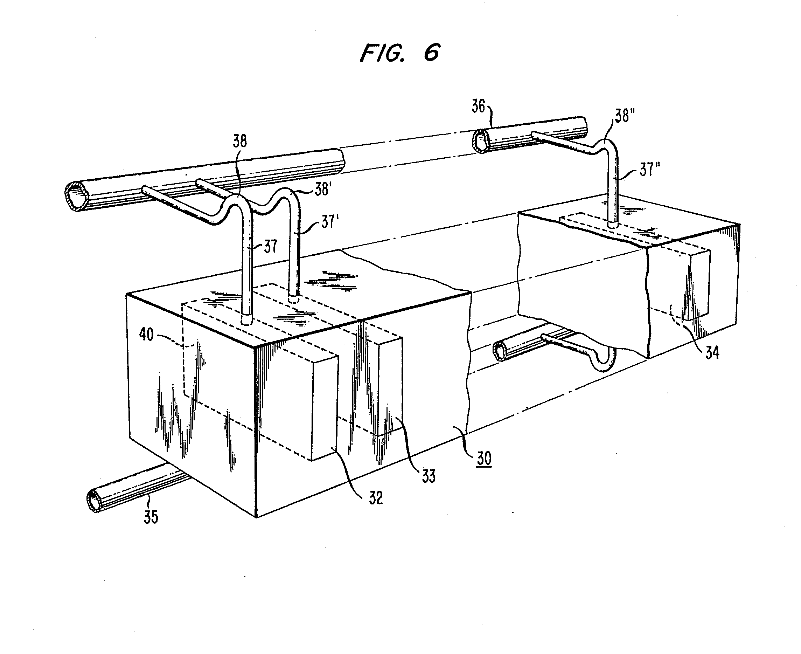

Figs. 2, 3 and 4, as combined in the manner shown in Fig. 5, show a block and line diagram of a material handling system which was designated generally as 10 in Fig. 1. Material handling system 10 was developed for batch processing systems wherein intermittent loading of materials as a charge in a heating unit or a pyrolysis chamber is required or desired. In particular, on and off-site storage of baled municipal solid waste, and provisions for transferring stored material into the feeding system, ensure that the pyrolysis chamber feed rate approaches a constant value as nearly as possible notwithstanding variations in the tipping or supply rate. The minimization of variations in the pyrolysis feed rate simplifies operation of the ovens, the gas systems, the generating facilities, and the residue processing system.

The material treatment process begins when vehicles (not shown) which are loaded with municipal solid waste material dump their loads onto tipping floor 39. In some embodiments, tipping floor 39 may be simply an enclosed sloped floor which is relatively large and inclined toward a plurality of shredder feed conveyors 33-35. A front loader (not shown) pushes the municipal solid waste onto the shredder feed conveyors.

The shredder feed conveyors are provided to set up a number of processing lines which are designated as 40, 50, and 60. For clarity of description, the progress of waste material along only one processing line will be described. However, it is to be understood that the same transactions are occurring in more than one processing line, and preferably in at least three, in accordance with Fig. 2.

Shredder feed conveyors 33-35 are of a conventional type and may be, for example, apron type conveyors equipped with a 60 HP drive motor, an electric or pneumatic clutch, and a zero speed switch (all not shown). The shredder feed conveyors run only in the forward direction, as is indicated by the arrows on Fig. 2. Illustratively, the shredder feed conveyor allows waste to drop into shredder 44. In one embodiment, approximately 95% of the waste material is reduced in size so that it can readily be handled by material handling system 10, and can be heated economically in the pyrolysis chamber. Preferably, shredder 44 divides the solid materials so as to have a mean particle size, or maximum dimension, of approximately 4 inches.

Shredded solids are conveyed from shredder 44 by a suitable conveying system 46 to a flow splitter 45. Illustratively, conveying system 46 comprises a sacrificial discharge conveyor (not shown) which, in a preferred embodiment, is located directly below shredder 44. The sacrificial discharge conveyor operates to absorb the shock of impact caused by shredder operation, thereby protecting the major portion of shredder discharge conveying system 46 from damage. Both conveyors in system 46 run only in the forward direction. A conventional belt-type conveyor is suitable for carrying the shredded waste material.

Flow splitter 45 divides the flow of shredded waste material into two essentially equal flows along a pair of conveyors 48a and 48b. In one embodiment of the invention, each of conveyors 46, 48a and 48b consists of a pair of conveyors. Thus, the pair of conveyors which form conveyor 46 are arranged above the pairs in conveyors 48a and 48b. Preferably, conveyor 46 is located directly above and centred over conveyors 48a and 48b. Conveyors 48a and 48b are operable bidirectionally. The direction in which the conveyors are operated determines the final destination of the shredded waste material stream. When all of the conveyors are operated in the direction indicated by the arrows there is a 50:50 split of the waste material stream on the upper level at flow splitter 45.

Conveyors 48a and 48b terminate at respective flow splitters 47 and 49 to produce a subsequent 50:50 split into paths 51 and 52, and 53 and 54, respectively, yielding an overall 25:25:25:25 division of the initial material stream. A control room operator is able to control flow splitter operation to compensate for variations in the quantity of feed material so that maximum use can be made of the balers. Each of the paths 51, 52, 53 and 54 feed into a respective baler 55, 56, 57 and 58.

Balers 55, 56, 57 and 58 comprise known extrusion-type balers which are designed to form bales of shredded solid municipal waste material having dimensions which are compatible with the size of the pyrolysis chamber entrance door. The bales are compressed to create a bulk density on the order of 35 to 70 pounds per cubic foot and wrapped with three to five wire ties to retain their shape. As will be described in greater detail below, the bulk density is selected so as to produce a predetermined, desired heating rate of the baled material in the pyrolysis chamber.

In a preferred embodiment, balers 55-58 include feed chutes (not shown) which have two feed sensors (also not shown) one at a low level and the other of a higher level in the feed chute. The baler compression cycle occurs automatically when the low level feed sensor is covered with raw material. When the high level sensor is covered with raw material, the associated flow splitter conveyor is caused to stop until the level of raw material in the feed chute is reduced to the low level sensor. Thus, the raw material is automatically distributed to balers which are not overfed.

Each baler discharges its bales onto a respective one of bale transfer arrangements 64-67. The bale transfer arrangements deliver the bales to bale conveyors 70 and 71. In a preferred embodiment, bale transfer arrangements 64-67 each comprise a transfer conveyor which receives the bale as it emerges from the baler, a 90 degree transfer device which lifts the bale from the transfer conveyor and lays it down on its most stable side, and a pusher ram which transfers the bale from the transfer conveyor onto either bale conveyor 70 or 71.

In a control aspect of the invention, a first limit switch (not shown) is arranged near each discharge end of balers 55-58. As each bale emerges from the discharge end of each baler, the respective first limit switch is activated to start the associated transfer conveyor moving at a predetermined rate. As the trailing end of the bale emerges from the baler, it is accelerated to match the transfer conveyor speed and travels along the conveyor until it hits a stop and strip a second limit switch (not shown) which stops the transfer conveyor. If a subsequent bale trips the first limit switch before the bale is transferred onto a respective one of conveyors 70 and 71, the baler is prevented from forming a subsequent bale. Thus, bale production is dependent upon a smooth flow of baled material onto conveyor 70 and 71.

As the bales are conveyed along bale conveyors 70 and 71, the bales are conveyed to adjacent further bale transfer arrangement 74 and 75 in Fig. 3 which serve to remove the bales from bale conveyors 70 and 71 when the bales are determined to be defective. Defective bales can be detected by an on-site operator or by other conventional means. In a preferred embodiment, baler transfer arrangements 74 and 75 comprise comprise one unit in the form of a hydraulically operated push-pull device straddling the conveyor 70 and 71. Such a device may be provided with means (not shown) whereby the operator can select to remove a defective bale from either conveyor 70 or conveyor 71. When a bale is selected as defective, control means are actuated which stop the conveyor carrying the defective bale and centre the defective bale so that a pusher plate on the transfer arrangement contacts the bale and removes it from the conveyor. In situations where both conveyors are carrying a defective bale simultaneously, the control system may have a predetermined priority built in.

Those bales which are determined not to be defective are conducted further along conveyors 70 and 71 to a further pair of bale transfer arrangements 76 and 77. Bale transfer arrangements 76 and 77 are mechanically similar to bale transfer arrangements 74 and 75 and are provided to operate in the event that conveyor 70 or 71 is shut down. The one of the conveyors which is shut down is unloaded of bales by its associated bale transfer arrangement, which also transfers the bales to the conveyor which remains operative.

It should be noted that cranes or other means can be employed to insert stored bales onto conveyor lines 70 and 71. Conversely, similar means can be employed to remove bales produced in excess from conveyor lines 70 and 71 and to load them into storage means, such as railroad cars, for future use.

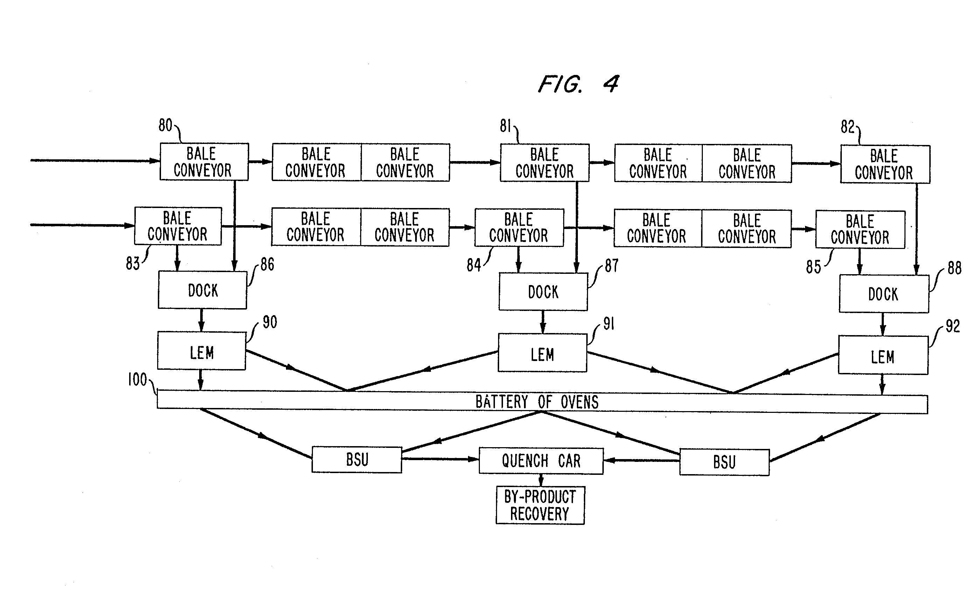

The material handling system is further provided with a plurality of accumulator conveyors 80-85 (Fig. 4). The accumulator conveyors are each equipped with an electric clutch (not shown) and an optical encoder (not shown) which operate in conjunction with each other to form a tightly spaced group of a predetermined number of bales in a known manner. The number of bales in the group is determined in accordance with the storage capacity of the oven loading device and the oven capacity itself as will be described in detail below.

In a preferred embodiment, three bales are accumulated on each accumulator conveyor. After a group of bales is accumulated on accumulator conveyors 80-85, the group of bales is centred on the associated accumulator conveyor and further conveyed to a pusher arrangement (not shown) to a respective one of dock areas 86-88. The arrangement is controlled such that

0118310

- 25 -

operation of selected accumulator conveyors, illustratively 83-85, is stopped while the bales on accumulator conveyors 80-82 are transferred across to the docks. Docks 86-88 are each equipped with means for transferring groups of accumulated bales onto magazines (not shown) which are loaded with the accumulated bales. Such loading is achieved by mechanism which is not shown in the drawing, but comprises a respective bale erector device which tilts to arrange the bales loaded therein in a vertical position. A ram (not shown) pushes the bales onto a respective magazine. In some embodiments, the process is repeated until a full load of illustratively 18 bales is loaded onto the magazine; the magazine having three vertical slots holding six bales apiece. The full magazines are removed from each of docks 86-88 by a respective load/ejection module 90-92 which transports the magazine to a battery of ovens 100.

In a specific illustrative embodiment a load/ ejection module is constructed as a track mounted device which operates on elevated tracks on the loading side of the oven. In the system of Fig. 4, each load/ejection module services one third of the ovens in battery 100. The load/ejection module aligns with the front of one of the pyrolysis chamber doors, removes the door, prepares it with sealant, charges the bales from the magazine into the oven by means of a ram, closes the door, and returns the empty magazine to its associated dock. For the slotted magazine arrangement described above, the load/ejection module is capable of indexing to align each slot with the door in order to respectively charge the contents of each slot into the oven with the ram. Load/ ejection modules 90-92 sequentially charge the individual ovens in battery 100 so that the content of each oven is in a different stage of pyrolysis, thereby yielding a more uniform overall off-gas for the battery.

When the municipal solid waste is completely pyrolyzed, backside oven unloaders 101 and 102 open the back side oven door and unload the pyrolyzed residue into quench car 103. Quench car 103 takes the hot residue to a quenching station (reference numeral 31 in Fig. 1) where it is water cooled. The carbonaceous residue is then treated to remove non-pyrolyzable matter in by-product recovery centre 104 in a manner to be described in detail below. It should be noted that more than one oven charge may be pyrolyzed before the residue is removed.

Pyrolysis

Most organic substances are thermally unstable, and can, upon heating in an oxygen free environment, be fragmented. Pyrolysis is the term used to describe the act of decomposing organic compounds through the application of heat. More specifically, pyrolysis is the process of destructive distillation carried out in an environment free of oxidizers. In contrast to combustion, which is highly exothermic or heat producing, pyrolysis is usually highly endothermic or heat absorbing. Because the process is endothermic, some of the combustible products generated are needed to underfire the ovens. However, the process is still energy self-sufficient.

The thermal cracking and condensation reactions in the pyrolysis process results in gases, liquids, and solid residues. The critical parameters which determine the quality and quantity of these products of solid waste pyrolysis are as follows: heating rate, temperature, and retention time in the oven.

In general, when the temperature is high, a higher percentage of gas (as compared to residue and oil) is produced. And, when the heating rate is high, the residue and water production (influenced by the methane formation reaction and the water-gas shift reaction) are lowest. Therefore, a high temperature achieved at a fast rate will yield the best results. It has been shown that an increase in pyrolysis temperature will decrease ash content in the residue and heavy organic liquid content, while increasing gas volume.

In the pyrolysis processes that have had extensive commercial applications in the past, the feedstock, e.g., wood and coal was homogeneous to a large degree. At the very least, the feedstock composition was a variable that was controllable within limits. The same is not true for municipal solid waste. Municipal solid waste is not only heterogeneous, but may vary widely from batch to batch, season to season, and area to area. Also, as time goes by, population habits and marketing and packaging techniques change, introducing other variables into the composition. Innumerable composition analysis studies have been performed on municipal solid waste over the years and have been reported in the literature. The only conclusion that can be drawn from these studies is that municipal solid waste is a variable and uncontrollable feedstock. Even calculated heating values based on the ultimate analysis of a given refuse sample will not agree with the experimental value of the same sample.

While the above-described material handling system can be used to feed a single high volume heating unit requiring a high flow rate of feedstock or to feed a plurality of individual, modular heating units, we have discovered that a particular advantage of pyrolysis in each of the plurality of ovens (as controlled by time of retention), a blending of the evolved gas stream occurs which compensates for the variations in feedstock parameters, thereby producing a more uniform off-gas which facilitates product separation.

In addition, we have discovered that the quality of off-gas composition can be improved by controlling the bulk density of the feedstock. As described above, the baler compresses the shredded, raw municipal solid waste material as it forms the bales to a predetermined value. In the practice of this invention, a bulk density of the order of 35-70 pounds per cubic foot has been found to produce the desired effect. While the retort is essentially isothermal, the bulk density creates a situation wherein there is a fast heating rate at the surface and a slow heating rate at the core of the baled material. Together with design of the gas offtake system, this promotes the formation of longer chain hydrocarbons and helps prevent their degradation into other products.

A plurality of horizontally disposed retorts of the type used to coke coal is ideally suited to the practice of this invention. Moreover, coke ovens are frequently available as surplus equipment, thus, greatly reducing the amount of capital required to institute a municipal waste treatment facility in accordance with the principles of this invention.

Referring to Fig. 6, a typical battery $30$ of horizontally disposed retorts is shown. Battery 30 is built of silica brick and comprises a plurality of oven chambers 32, 33, 34 on a common foundation. Piping 35 carries gaseous fuel for underfiring oven chambers 32, 33, 34. Heating and regenerative chambers (not shown), such as are well known to those of ordinary skill in the art, are provided for firing the ovens. Off-take piping 36 collects the generated pyrolysis gas from oven chambers 32, 33, 34 as it evolves through individual standpipes 37, 37', 37" and goosenecks 38, 38', 38".

Only three oven chambers 32, 33, 34 are shown for the purposes of illustration, but it is to be understood that a much larger number of ovens are contained in battery 30. In an illustrative embodiment, battery 30 comprises 55 oven chambers. Oven chambers 32, 33, 34 are of a type well known to those of ordinary skill in the art such as the Koppers cross-regenerative type having dimensions of 10 feet in height, 37 feet in length, and about 18 inches in width to produce an oven volume of approximately 564 cubic feet.

As discussed above, the plurality of ovens is advantageously fed in sequential order so that each oven charge is in a different state of pyrolysis so that the evolved gases comingling in off-take piping 36 have a more uniform composition since the constituents of the generated gas are time and temperature dependent. At 500 degrees Fahrenheit, for example, there is sufficient energy to begin the evolution of $CO_2$; at 600 degrees Fahrenheit, CO; at 750 degrees Fahrenheit, $CH_4$; and at 1000 degrees Fahrenheit, $H_2$.

The baled solid waste is charged in an oven (as described above) leaving a small space at the top and the back end to allow for initial gas evolution and storage space for the first charge residues. The walls of the oven are preheated at 1800 degrees Fahrenheit so that the mass has the fastest heating rate possible and the temperature is sufficient to cause the evolution of all desirable gas constituents.

Heat is first conducted to the material just next to the oven sides and travels to the centre of the mass from all sides. After the volatiles have evolved and the outer layer has charred, the residue will drop to the bottom of the oven. A gas layer is created between the solid waste mass and the oven wall. The heat must radiate through this layer to reach what is left of the baled material. When enough of the mass has evolved to cause a lack of support, the mass will collapse. The retention time in a pyrolytic process must be sufficient for all volatiles to evolve, leaving an inert residue. Therefore, the temperature at the centre of the mass must not be less than 600°F for the most benefit to be obtained from the pyrolyzation of the solid wastes. After four hours, almost all of the volatiles will have been evolved from the charged material of the type and quantity described above. Then, an additional charge will be placed in the oven thereby pushing the first charge residue further into the oven. This procedure is repeated until a maximum of four charge residues are in the oven.

After the fourth cycle, the backside door 40 is opened and the charge residue is unloaded by a back side oven unloader into a transfer car. It is then taken to the quencher 8 where it is water cooled. The quenched residue is then further processed as shown in Fig. 1 and described in detail below.

The raw gas evolved in each of the oven chambers exits through standpipe 37, 37', 37" at a temperature of about 1100 degrees Fahrenheit. Water spray may cool the gas further in goosenecks 38, 38', 38" to about 400 degrees Fahrenheit. The gas enters the collecting main of off-take piping 36 where it may be even further cooled by water spray to about 185 degrees Fahrenheit.

The collecting main 36 runs the entire length of battery 30 and has emergency gas bleeder stacks (not shown) located at each end, which in the event of a failure in the gas handling system, may be manually opened to relieve pressure in the main.

Well known means for controlling pressure of the gas stream, preventing air infiltration into the gas stream, and creating suction to draw the gas through the system are employed. The gas is treated to recover by-products as shown in Fig. 1 and described in detail below.

Product Recovery

Referring back to Fig. 1, the hot gas generated in the pyrolysis process exits from oven 20 and travels through a standpipe, gooseneck and collecting main (shown as reference numerals 37, 38, and 36, respectively, in Fig. 6). A water spray, illustratively at quencher 21, cools the gas and causes the higher molecular weight organica, or pyrolytic oil, and particulates to condense out of the gas stream. The pyrolytic oil and water condensate mixture is transferred to a decanting tank separator 25 wherein the difference in the specific gravity of the two fractions causes the condensate to separate into two phases; the heavier pyrolytic oil sinks to the bottom while the lighter water floats on top. The pyrolytic oil flows by gravity into collecting and storage tanks (not shown).

The highly acidic pyrolytic oil collected off the gas stream has a low sulfur content and consists of highly complex oxygenated compounds ranging in molecular weight from 32 to 10,000 amu. It is dark, reddish-brown in colour and similar in physical properties (BTU value, viscosity) to a low-grade fuel oil. As a fuel, it is suitable for use in the boiler house.

The water phases may be recycled back through the quenching operation. The excess or a minor portion of the process water may be sent to treatment plant 29 for further purification for use in the boiler house. Treatment plant 29 comprises, among other things, an activated sludge wastewater treatment facility of a type well known to those of ordinary skill in the art which breaks down the biodegradable impurities in the process water.

It is advantageous to recycle the water since it is contaminated with organic compounds which may include various acids, alcohols, and ketones such as acetic acid, methanol, furfural, acetone, formic acid and phenol. Some of these organic compounds are azeotropic and are, therefore, hard to separate. It should be noted that exact composition is highly dependent upon the raw municipal solid waste composition, which will vary from batch to batch, with the heating rate, and with the ultimate pyrolysis temperature.

The non-condensed gases are further cooled in a series of coolers referred to as separator 22 in Fig. 1. The coolers of separator 22 are illustratively indirect heat exchangers of standard sheet and tubing design. More pyrolytic oil and water will be condensed as the temperature is decreased and is circulated to decanting separator 25.

The essentially oil and water-free gas leaves separator 22 via action of an exhauster (not shown) such as is well known in the art and enters separator 23. Illustratively, separator 23 comprises a spray type absorbing tower wherein the gas stream flows countercurrent to the flow of cooling water. The water is pumped through a heat exchanger which raises the temperature about $100^{\circ}F$. Then the methyl chloride is evaporated in a flash tank in a technique known to those of ordinary skill in the art. The methyl chloride vapours are condensed, cooled and stored. The water from the flash tank may be recycled.

Next, the gas stream enters a scrubber shown as separator 24 wherein benzene-toluene-xylene fractions are absorbed in a wash oil. Gas flows countercurrent to wash oil flow in a series of wash oil scrubbers, the first of which may be packed, for example, with spiral steel turnings and the second of which is an open spray type scrubber. The benzene-toluene-xylene fractions are separated from the wash oil by known techniques of heat exchange and distillation. The absorbent wash oil is purified and recirculated through the scrubbers comprising separator 24.

After scrubbing, the gas may enter oxide boxes containing ferrous oxide and wood chips (not shown) wherein certain trace elements such as sulfur dioxide are removed.

As a final step, the non-condensible gases containing a mixture of saturated and unsaturated aliphatic hydrocarbons, hydrogen, carbon monoxide and carbon dioxide, enter compressor 26 where they are subjected to liquefaction. Separator 27, which illustratively comprises an osmotic separator and a fractional distillation column, separates the liquefied gas into its individual components: carbon dioxide, carbon monoxide, hydrogen, methane, ethane, propane, propene, and butane. Certain ones of these gases can be used as fuel to underfire the oven and that proportion is diverted back into oven piping 35 (Fig. 6). Methane and ethane are saleable to the local public utility as a supplement to natural gas. Carbon dioxide and hydrogen also have value as commercial gases.

The inert residue which is removed from the backside of the ovens is passed through water quencher 31 to cool it to ambient temperature and to prevent further oxidation.

The residue contains ferrous and non-ferrous metals, glass and char. The ferrous and non-ferrous metals remain unoxidized by the pyrolysis process as a result of the reducing atmosphere. The ferrous metals are separated out in magnetic separator 5 which may illustratively comprise an electromagnet to take out the metal bale ties and a belt magnetic separator, such as is known in the art, to remove most of the other metals. Aluminum is removed by the use of an eddy current separator 6 as shown in Fig. 1 or by other techniques which are well known in the art.

Glass will be agglomerated and of mixed colour but will be essentially free of contamination. Because of the size of glasseous matter as compared to the char, the glass can be removed for salvaging by passing the char through screener 7. The carbonaceous char remaining is reduced in volume 20:1 as compared to the initial municipal solid waste. Its physical properties are similar to anthracite coal, charcoal or activated carbon and it can be used as a fuel, as a road bed filler, or as land-fill.

0118310

- 38 -

CLAIMS:

1. A treatment plant for municipal solid waste formed of a plurality of constituent components, the treatment system being of the type wherein the municipal solid waste is pyrolyzed in a heating unit and having a solid waste material handling system, the system being characterised by

shredding means (44) for operating on the municipal solid waste to produce a flow of shredded municipal solid waste formed of a plurality of constituent components which have a predetermined maximum dimension;

shredder discharge means for conveying said flow of shredded municipal solid waste away from said shredding means;

a plurality of baler means (55-58) for organizing said flow of shredded municipal solid waste into bales;

flow splitter means (45, 47, 49) for conveying said flow of shredded municipal solid waste along a plurality of flow paths to respective ones of said plurality of baler means;

bale holding means for holding said bales of said shredded municipal waste; and

bale feed means for supplying said bales to the heating unit, said bales being provided to the heating unit at a predetermined, substantially constant rate.

2. A treatment plant as claimed in claim 1, characterised in that there is further provided receiving means (3a) for receiving the municipal solid waste.

3. A treatment plant as claimed in claim 2, characterised in that there is further provided shredder feed means having an input portion near said receiving means and an output portion near said shredding means for conveying the municipal solid waste material from said receiving means to said shredding means.

4. A treatment plant as claimed in any preceding claim, characterised in that said flow splitter means further comprises multilevel conveyor means having at least an upper conveyor means and a lower conveyor means.

5. A treatment plant as claimed in claim 4, characterised in that said upper and lower conveyor means are each provided with a respective number of conveyor belts having a predetermined ratio with respect to each other.

6. A treatment plant as claimed in claim 4, characterised in that said upper and lower conveyor means are each comprised of respective conveyor belts, said conveyor belts being adapted to operate bidirectionally.

7. A treatment plant as claimed in claim 1, characterised in that there is further provided sacrificial discharge means arranged near said shredding means for receiving said shredded municipal solid waste and delivering said shredded municipal solid waste to said shredder discharge means, for protecting said shredder discharge means.

8. A treatment plant as claimed in any preceding claim, characterised in that there is further provided bale transfer means (70, 71) for conveying said bales to said bale holding means.

9. A treatment plant as claimed in claim 8, characterised in that there is further provided:

a conveyor means for receiving said bales from said baler means;

a 90 degree transfer device for laying each of said bales on a side thereof; and

pusher means for transferring said bales onto said bale transfer means.

10. A treatment plant as claimed in claim 8, characterised by means (74, 75) for removing at least one selected defective bale from said bale transfer means.

11. A treatment plant as claimed in claim 10, characterised in that said means for removing defective bales comprises an hydraulically operated push-pull device mounted in the vicinity of said bale transfer means, said push-pull device further having a pusher means for removing said selected defective bale from said bale transfer means.

12. A treatment plant as claimed in any of claims 8 to 11, characterised in that said bale transfer means comprises at least first and second conveyor lines.

13. A treatment plant as claimed in claim 12, further characterised by means (76, 77) for transferring bales between said first and second conveyor lines.

14. A treatment plant as claimed in claim 8, characterised in that there are further provided means for selectably depositing baled material onto said bale transfer means and removing selectable excess baled municipal solid waste material from said bale transfer means for storage.

15. A treatment plant as claimed in any preceding claim, characterised in that said bale holding means comprises a multilevel bale magazine wherein selected ones of said bales are held temporarily in groups of bales having predeterminable numbers of bales in said groups, wherein said bales in said groups are arranged in a predetermined spatial relationship with respect to one another.

16. A treatment plant as claimed in any preceding claim, characterised in that the heating unit is a coke oven.

17. A treatment plant for municipal solid waste, the treatment system being of the type wherein municipal solid waste is packaged in bales and pyrolyzed, the treatment system being characterised by

bale control means for organizing the said bales into groups having predetermined numbers of bales;

at least one coke oven (32-34) for pyrolyzing the municipal solid waste at a predetermined rate, said coke oven having at least one opening thereto and an associated cover for closing said opening; and

feed means for supplying said groups of bales to said at least one coke oven in accordance with said predetermined rate.

18. A treatment plant as claimed in claim 17, further characterised in that there are provided magazine means cooperating with said bale control means for holding said bales in said groups of bales.

19. A treatment plant as claimed in claim 18, characterised in that said bale control means comprises bale orienting means for stacking a group of said bales.

20.	A treatment plant as claimed in claim 19, characterised in that said bale control system further comprises magazine loading means for loading said stacked group of bales onto said magazine means.

21.	A treatment plant as claimed in claim 20, characterised in that there is further provided load/ejection means for positioning said magazine means in the vicinity of said opening of said coke oven.

22.	A treatment plant as claimed in claim 21, characterised in that said load/ejection means further comprises:

means for removing and installing said cover; and

means for applying a sealant to said cover.

23.	A treatment plant as claimed in claim 21, characterised in that said load/ejection means further comprises means for unloading said stacked group of bales from said magazine means into said coke oven.

24.	A method of treating municipal waste materials to form products of pyrolysis, the method being characterised by the steps of:

conveying a substantially continuous flow of municipal solid waste material to a baling machine;

baling the municipal solid waste material which is conveyed in said substantially continuous flow to produce a plurality of bales;

loading a predetermined number of said bales of municipal solid waste material onto a magazine;

transferring said predetermined number of said bales of municipal solid waste material into an oven;

pyrolyzing said bales of municipal solid waste material in said oven; and

extracting said products of pyrolysis from said oven.

25. A method as claimed in claim 24, characterised in that said oven is a coke oven and said step of transferring said predetermined number of bales into said oven further comprises:

opening a door of said coke oven to produce an opening therein; and

pushing a predetermined number of said bales of municipal solid waste material from said magazine into said coke oven through said opening in said coke oven.

26. A method as claimed in claim 25, characterised by the further steps of:

applying a sealant material to said door of said coke oven; and

installing said door to close said opening in said coke oven.

27. A method as claimed in claim 24, characterised in that there is further provided the step of splitting said substantially continuous flow of municipal solid waste material into a plurality of flow directions along respective paths, each of said respective paths being terminated at a respective baling machine.

28. A method as claimed in claim 27, characterised in that there is provided a plurality of coke ovens, said step of loading a predetermined number of said bales of municipal solid waste material onto a magazine comprising the further steps of:

selecting one of a plurality of magazines;

loading each of said plurality of magazines with a respective number of said bales; and

transferring each of said loaded magazines to the vicinity of a respectively associated one of said plurality of coke ovens.

29. A method as claimed in claim 28, characterised in that each of said loaded magazines is unloaded into said respective one of the coke ovens, said unloading of said magazines being performed in accordance with a predetermined sequence.

30. A method as claimed in claim 24, characterised in that there are further provided the steps of:

counting said bales prior to being loaded onto said magazine; and

accumulating said bales into groups in response to said counting step.

31. A method as claimed in claim 24, characterised in that there is provided the further step of storing ones of said bales which are produced at a rate faster than a rate at which they may be loaded into said coke ovens.

32. A method as claimed in claim 24, characterised in that, prior to the step of loading a predetermined number of said bales, there is provided the steps of examining said bales and removing selected ones of said bales which have been determined as having a defect.

33. A method as claimed in claim 24, characterised in that there is provided the further step of compressing the municipal solid waste material during said step of baling to achieve a predetermined bulk density of municipal solid waste material in each of said bales.

34. A method as claimed in claim 24, characterised in that there are provided a plurality of magazines and ovens, said step of transferring said predetermined number of bales into said oven being performed in replication for each of said plurality of ovens from respective ones of said magazines, said replicated steps of transferring being performed in accordance with a predetermined time sequence.

FIG. 1

FIG. 2

FIG. 5

| FIG. 2 | FIG. 3 | FIG. 4 |

FIG. 3

BALE TRANSFER 74
BALE CONVEYOR 70
BALE CONVEYOR 71
BALE TRANSFER 75
BALE TRANSFER 76
BALE CONVEYOR
BALE CONVEYOR
BALE TRANSFER 77
BALE CONVEYOR
BALE CONVEYOR

0118310

FIG. 4

FIG. 6